# EUROPÄISCHE PATENTSCHRIFT

(11) **EP 1 995 261 B1**
(45) Veröffentlichungstag und Bekanntmachung des Hinweises auf die Patenterteilung: **06.10.2010**
(21) Anmeldenummer: 08008798.4
(22) Anmeldetag: 10.05.2008
(51) Int. Cl.: C08G 18/10, C08G 18/42, C08G 18/71, C08G 18/28, C09J 175/06

(54) **Polyester-prepolymere**
Polyester prepolymers
Prépolymères polyester

(30) Priorität: 22.05.2007 DE 102007023197
(43) Veröffentlichungstag der Anmeldung: 26.11.2008
(73) Patentinhaber: Bayer MaterialScience AG, 51368 Leverkusen (DE)
(72) Erfinder: Ludewig, Michael, Dr., 51373 Leverkusen (DE); Matner, Mathias, Dr., 41464 Neuss (DE)

(56) Entgegenhaltungen:
- EP-A- 0 354 472
- EP-A- 1 674 546
- WO-A-00/00530

## Beschreibung

Die vorliegende Erfindung betrifft Alkoxysilangruppen aufweisende Prepolymere auf Basis von speziellen, niedrigviskosen Polyesterpolyolen, die eine besonders hohe Festigkeit aufweisen, ein Verfahren zu ihrer Herstellung und ihre Anwendung als Bindemittel für Klebstoffe, Primer oder Beschichtungen.

Alkoxysilanfunktionelle Polyurethane, die über eine Silanpolykondensation vernetzen sind lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige Alkoxysilanterminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet.

Solche alkoxysilanfunktionellen Polyurethane können gemäß US-A 3,627,722 oder US-A 3,632,557 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird. Eine weitere Möglichkeit zur Herstellung von alkoxysilanfunktionellen Polyurethanen besteht nach der Lehre der EP-A 0 070 475 darin, hydroxyfunktionelle Polyurethanprepolymere mit isocyanatfunktionellen Alkoxysilanen zu verkappen. Gemäß der EP-A 0 372 561 können hier auch langkettige Polyether Anwendung finden, die nicht über Prepolymerisierung vorverlängert wurden. All diese, auf Polyetherpolyolen basierenden Systeme bilden nach der Aushärtung allerdings weichelastische Polymere mit einer relativ geringen Festigkeit, die z.B. für strukturelles Kleben weniger geeignet sind.

Es sind auch schon auf Polyestern basierende alkoxysilanfunktionelle Polyurethane beschrieben worden. So beschreiben die EP-A 0 354 472 oder die WO2004/005420 silanhärtende Schmelzklebstoffe, die zwar eine beträchtliche Zugfestigkeit erreichen können, aber naturgemäß bei Raumtemperatur Feststoffe sind. Die EP-A 0 480 363 beschreibt zwar ebenfalls ein spezielles Polyester-basierendes System, bei dem auch noch Acrylat- Bestandteile modifiziert werden, hier ist allerdings offensichtlich ein Lösemittel erforderlich, um die gewünschte Viskosität erreichen zu können. Ein modernes Klebstoffsystem sollte aber kein Lösemittel enthalten. Andere Veröffentlichungen, wie beispielsweise die EP-A 1 674 546, beschreiben zwar für die stukturelle Verklebung geeignete, teilweise auch auf Polyester-Polyol basierende, feuchtigkeitshärtende Prepolymer-Klebstoffsysteme. Jedoch handelt es sich bei diesen um Schmelzklebstoff-Systeme, die bei Raumtemperatur fest und daher nicht unmittelbar verarbeitbar sind und zur Verarbeitung bzw. Einsatz zunächst aufgeschmolzen werden müssen.

Als immerhin "fließfähig" wird das Polyesterpolyol basierende silanhärtende Polyurethan, das in der US-A 6,756,456 beschrieben wird, bezeichnet. Hier wird als Isocyanat allerdings das nur schwer zugängliche und damit teure TMXDI verwendet. Weiterhin wird die möglicherweise geringe Viskosität offensichtlich durch eine Polyether-Polyester-Blockstruktur erreicht. Die Patentschrift macht keine Angaben zur Zugfestigkeit eines solchen Systems. Wie bereits dargelegt, sind Polyether-haltige silanhärtende Polyurethane aber eher weichelastisch und weisen eine geringere Zugfestigkeit auf.

Aufgabe der vorliegenden Erfindung war es nun, Polyester-basierende silanhärtende Polyurethane zur Verfügung zu stellen, die eine ausreichend geringe Viskosität aufweisen, die eine Verarbeitung bei Raumtemperatur erlaubt und die ausgehärtet gleichzeitig eine hohe Kohäsionsfestigkeit bei ausreichend hoher Dehnbarkeit erreichen, die strukturelles Kleben ermöglicht.

Es wurde nun gefunden, dass sich derartige Prepolymere herstellen lassen, indem man ein Polesterpolyol, das auf Basis der Rohstoffe Adipinsäure, Hexandiol und Neopentylglykol hergestellt wird, entweder direkt mit einem isocyanatfunktionellen Silan umsetzt oder zunächst mit einem Diisocyanat ein NCO-Prepolymer herstellt, das dann in einem zweiten Schritt mit einem aminfunktionellen Silan modifiziert wird.

Gegenstand der Erfindung sind daher mit Alkoxysilangruppen modifizierte Polyurethane der allgemeinen Formel (I), 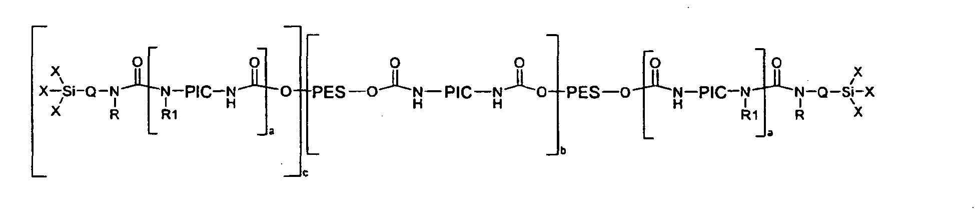 in der
- PIC: ein um die Isocyanatgruppen reduzierter Rest eines Diisocyanates ist,
- PES: ein um die OH-Gruppen reduzierter Rest eines Polyesterpolyoles mit 2-3 OH- Gruppen ist, das zu mindestens 90 Gew.-% (bezogen auf Säure und Alkohole) aus Adipinsäure und einer Mischung aus jeweils mindestens 20 Gew.-% (bezogen auf die Mischung) Butandiol oder Hexandiol und Neopentylglykol hergestellt wurde und ein zahlenmittleres Molekulargewicht (Mn) zwischen 500g/mol und 2500g/mol aufweist,
a = 0 oder 1 ist,
b = 0 bis 5 ist,
c = 1 oder 2 ist,
- X: gleiche oder verschiedene Alkoxy- oder Alkylreste sind, die auch verbrückt sein können, wobei aber an jedem Si-Atom mindestens ein Alkoxyrest vorhanden sein muß,
- Q: ein difunktioneller linearer oder verzweigter aliphatischer Rest ist,
- R: entweder für Wasserstoff oder für einen beliebigen organischen Rest steht, der mit R1 (falls vorhanden) verbrückt sein kann, wobei R immer für Wasserstoff steht, wenn a = 0 ist, und
- R1: entweder für Wasserstoff steht, oder für einen organischen Rest, der mit R verbrückt ist.

Ferner ist ein Gegenstand der Erfindung ein Verfahren zur Herstellung von mit Alkoxysilangruppen modifizierten Polyurethanen, bei dem ein Polyesterpolyol mit 2-3 OH-Gruppen, das zu mindestens 90 Gew.-% (bezogen auf Säure und Alkohole) aus Adipinsäure und einer Mischung aus jeweils mindestens 20 Gew.-% (bezogen auf die Mischung) Butandiol oder Hexandiol und Neopentylglykol hergestellt wurde und ein zahlenmittleres Molekulargewicht (Mn) zwischen 500g/mol und 2500g/mol aufweist,
entweder
A) zunächst mit einem Überschuss Diisocyanat zu einem isocyanatfunktionellen Polyurethanprepolymer umgesetzt wird, welches anschließend mit einer Alkoxysilylgruppen tragenden Verbindung, die als weitere Funktionalität eine mit Isocyanatgruppen reaktive Funktionalität trägt, verkappt wird
   oder
B) optional zunächst mit einem Unterschuss Diisocyanat zu einem OH-funktionellen Polyurethanprepolymer umgesetzt wird und anschließend die OH-Gruppen dieses Prepolymeres und/oder Polyesters mit einem isocyanatfunktionellen Alkoxysilan verkappt werden.

Erfindungswesentlich ist die Verwendung eines Polyesterpolyols, das im wesentlichen das Umsetzungsprodukt von Adipinsäure als Säurekomponente mit einer Diolkomponente ist, die eine Mischung aus Neopentylglykol und Hexandiol oder/und Butandiol ist. Diese Diolkomponente muss mindestens 20 Gew.-%, vorzugsweise mindestens 30 Gew.-% Neopentylglykol und mindestens 20 Gew.-%, vorzugsweise mindestens 30 Gew.-% Hexandiol und/oder Butandiol enthalten.

Das Polyesterpolyol kann auch bis zu 10 Gew.-%, vorzugsweise bis zu 5 Gew.-%, andere Komponenten enthalten, etwa Triole, um die Funktionalität zu modifizieren. Grundsätzlich können aber alle mehrwertigen, vorzugsweise zweiwertigen oder dreiwertigen Alkohole wie beispielsweise Ethylenglykol, Triethylenglykol, Tetraethylenglykol, Propandiol-1,2 und -1,3, Butandiol-1,4 und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxy-ethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, 1,4-Phenoldimethanol, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite mitverwendet werden. Gegebenenfalls können auch andere mehrbasische, vorzugsweise aber zweibasische Carbonsäuren mitverwendet werden. Anstelle der freien Polycarbonsäuren können auch die entsprechenden Polycarbonsäureanhydride oder entsprechende Polycarbonsäureester von niedrigen Alkoholen oder deren Gemische zur Herstellung des Polyesters mitverwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispielhaft sind genannt Phthalsäure, Isophthalsäure, Bernsteinsäure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäure-anhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester. Es ist aber bevorzugt, keine weiteren Komponenten mitzuverwenden.

Die erfindungsgemäß einsetzbaren Polyesterpolyole haben zahlenmittlere Molekulargewichte von 500 g/mol bis 2.500 g/mol, bevorzugt von 800 g/mol bis 2.000 g/mol.

Zur Herstellung der erfindungsgemäßen Polyurethane ist es grundsätzlich notwendig, das Polyesterpolyol mit Alkoxysilangruppen tragenden Komponenten zu modifizieren. Dazu können zwei an sich bekannte Verfahren verwendet werden.

So ist es einerseits möglich, das Polyesterpolyol oder ein OH-funktionelles Prepolymer, das durch die Umsetzung des Polyesterpolyols mit einem Unterschuss an Diisocyanaten hergestellt wurde, mit einer Alkoxysilylgruppe zu modifizieren, die als weitere Funktionalität auch noch eine Isocyanatgruppe trägt.

Solche Verbindungen sind an sich bekannt, beispielhaft genannt seien Isocyanatomethyltrimethoxysilan, Isocyanatomethyltriethoxysilan, (Isocyanatomethyl)methyl-dimethoxysilan, (Isocyanatomethyl)methyldiethoxysilan, 3-Isocyanatopropyltrimethoxysilan, 3-Isocyanatopropylmethyldimethoxysilan, 3-Isocyanatopropyltriethoxysilan und 3-Isocyanato-propylmethyldiethoxysilan. Bevorzugt ist hier die Verwendung von 3-Isocyanatopropyl-trimethoxysilan.

Wie bereits erwähnt kann bei dieser Ausführungsform des Verfahrens zur Herstellung des erfindungsgemäßen Polyurethans auch ein OH-funktionelles Prepolymer zu Einsatz kommen, das durch die Umsetzung des beschriebenen Polyesterpolyols mit einem Unterschuss Diisocyanat umgesetzt wurde. Hier wird vorzugsweise ein NCO:OH-Verhältnis von 1:1,3 bis 1:10, besonders bevorzugt von 1:1,5 bis 1:3 gewählt. Als verwendbare Diisocyanate kommen aromatische, aliphatische und cycloaliphatische Diisocyanate in Betracht. Geeignete Diisocyanate sind Verbindungen der Formel PIC(NCO)₂ mit einem mittleren Molekulargewicht unter 400, worin PIC einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe 2,4-/2,6-Toluoldiisocyanat (TDI), Methylendiphenyldiisocyanat (MDI), Naphtyldiisocyanat (NDI), Xylylendiisocyanat (XDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methylcyclohexan, 1,3-Diisocyanato-2-methyl-cyclohexan und α,α,α',α'-Tetramethyl-m-xylylendiisocyanat sowie aus diesen Verbindungen bestehende Gemische.

Bevorzugt werden hier IPDI, HDI oder TDI bzw. MDI-Derivate verwendet. Besonders bevorzugt werden als Diisocyanat 1-Isocyanato-3,3,5-trimethyl-5-isocyanatomethylcyclohexan (IPDI) oder Hexamethylendiisocyanat (HDI) eingesetzt.

Sowohl die ggf. notwendige Herstellung eines OH-funktionellen Prepolymers, wie auch die Verkappung dieses Prepolymers bzw. des Polyesterpolyols können durch geeignete Katalyse beschleunigt werden. Zur Beschleunigung der NCO-OH-Reaktion kommen dem Fachmann an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden.

Besonders bevorzugt wird Dibutylzinndilaurat als Urethanisierungskatalysator eingesetzt.

Im erfindungsgemäßen Verfahren wird diese Katalysatorkomponente, sofern mitverwendet, in Mengen von 0,001 bis 5,0 Gew.-%, bevorzugt 0,001 bis 0,1 Gew.-% und besonders bevorzugt 0,005 bis 0,05 Gew.-% bezogen auf Festgehalt des Verfahrensprodukts eingesetzt.

Die Urethanisierung der erfindungsgemäßen Polyesterpolyole mit Diisocyanaten oder isocyanatfunktionellen Alkoxysilanen wird bei Temperaturen von 20 bis 200°C, bevorzugt 40 bis 120°C und besonders bevorzugt von 60 bis 100°C durchgeführt.

Die Reaktion wird fortgeführt, bis ein vollständiger Umsatz der NCO-Gruppen der isocyanathaltigen Verbindung erreicht ist. Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das erfindungsgemäße Verfahrens kontinuierlich z.B. in einem StatikMischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Die nach dieser Ausführungsform der Erfindung erhältlichen mit Alkoxysilangruppen modifizierten Polyurethane haben eine Viskosität von weniger als 100 000 mPas, vorzugsweise eine solche von weniger als 30 000 mPas und ganz besonders bevorzugt von weniger als 10 000 mPas (alle 23°C, Gp= 47,94/s).

Das zweite Verfahren zur Herstellung der erfindungsgemäßen Polyurethane beruht auf einer Umsetzung der Polyesterpolyole zunächst mit einem Überschuss Diisocyanat zu einem isocyanatfunktionellen Prepolymer und auf der weiteren Umsetzung dieser Isocyanatgruppen mit einer Alkoxysilylgruppen tragenden Verbindung, die als weitere Funktionalität auch noch eine mit Isocyanatgruppen reaktive Funktionalität trägt.

Im Unterschied zu dem ersten Verfahren wird für die Synthese eines NCO-Prepolymers aber ein Überschuss an Diisocyanat verwendet und zwar vorzugsweise ein NCO:OH-Verhältnis von 1,3:1,0 bis 2:1, besonders bevorzugt von 1,5:1,0 bis 2:1 gewählt. Als verwendbare Diisocyanate kommen die bereits genannten aromatischen, aliphatischen und cycloaliphatischen Diisocyanate in Betracht.

Auch hier werden als Diisocyanat 1-Isocyanato-3,3,5-trimethyl-5-isocyanatomethylcyclohexan (IPDI) oder Hexamethylendiisocyanat (HDI) bevorzugt eingesetzt.

Auch diese Urethanisierung kann analog zum ersten Verfahren durch Katalyse beschleunigt werden; auch die Temperaturbereiche der Reaktion sind entsprechend.

Die Reaktion wird fortgeführt, bis ein vollständiger Umsatz der OH-Gruppen der Polyesterpolyole erreicht ist. Der Verlauf der Reaktion wird sinnvollerweise durch die Überprüfung des NCO-Gehaltes überwacht und ist beendet, wenn der entsprechende theoretische NCO-Gehalt erreicht ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

In einem weiteren Schritt werden diese NCO-Prepolymere mit isocyanatreaktiven Alkoxysilanverbindungen umgesetzt. Geeignete isocyanatreaktive Alkoxysilanverbindungen sind dem Fachmann hinlänglich bekannt, beispielhaft genannt seien Aminopropyltrimethoxysilan, Aminopropylmethyl-dimethoxysilan, Aminopropyltriethoxysilan, Aminopropylmethyldiethoxysilan, Aminomethyltrimethoxysilan, Aminomethyl-triethoxysilan, (Aminomethyl)methyldimethoxysilan, (Aminomethyl)methyldiethoxysilan, *N*-Butyl-aminopropyltrimethoxysilan, *N*-Ethyl-aminopropyltrimethoxysilan und *N*-Phenyl-aminopropyltrimethoxysilan.

Desweiteren können als isocyanatreaktive Verbindungen auch die Asparaginsäureester verwendet werden, wie sie in der EP-A 596360 beschrieben werden. Bei diesen Molekülen der allgemeinen Formel II 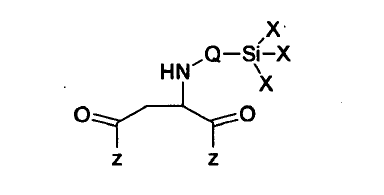 bedeutet X gleiche oder verschiedene Alkoxy- oder Alkylreste, die auch verbrückt sein können, wobei aber an jedem Si-Atom mindestens ein Alkoxyrest vorhanden sein muss, Q ist ein difunktioneller linearer oder verzweigter aliphatischer Rest und Z steht für einen Alkoxyrest mit 1 bis 10 Kohlenstoffatomen. Die Verwendung von solchen Asparaginsäurestern ist für diese Ausführungsform der Erfindung bevorzugt. Beispiele für besonders bevorzugte Asparaginsäureester sind *N*-(3-Triethoxysilylpropyl)asparaginsäure-diethylester, *N*-(3-Tri-methoxysilylpropyl)-asparaginsäurediethylester und *N*-(3-Dimethoxy-methylsilylpropyl)-asparaginsäurediethylester. Ganz besonders bevorzugt ist die Verwendung von *N*-(3-Trimethoxysilyl-propyl)asparaginsäurediethylester.

Diese Umsetzung mit isocyanatreaktiven Alkoxysilanen erfolgt innerhalb eines Temperaturbereiches von 0°C bis 150°C, vorzugsweise von 20°C bis 80°C, wobei die Mengenverhältnisse in der Regel so gewählt werden, dass pro Mol eingesetzter NCO-Gruppen 0,95 bis 1,1 Mol der isocyanatreaktiven Alkoxysilanverbindung eingesetzt werden.

Bei der besonders bevorzugten Verwendung der isocyanatreaktiven Alkoxysilanen der Formel II kann es gemäß der Lehre der EP-A 0 807 649 zu einer Cyclokondensation kommen, die die Viskosität der erfindungsgemäßen alkoxysilangruppenaufweisenden Prepolymere noch weiter absenken kann. Dementsprechend kann diese Hydantoin-Bildung in einer bevorzugten Ausführungsform der vorliegenden Erfindung auch absichtlich herbeigeführt werden.

Diese Cyclokondensation kann durch einfaches Rühren des mit einem isocyanatreaktiven Alkoxysilan der Formel II verkappten Polyester-basierenden Polyurethan Prepolymeren bei Temperaturen von 70°C bis 180°C, vorzugsweise von 80°C bis 150°C herbeigeführt werden. Die Reaktion kann ohne weitere Katalyse, oder, bevorzugt, durch Katalyse beschleunigt durchgeführt werden. Als Katalysatoren kommen sowohl basische, wie auch saure organische Verbindungen in Betracht, beispielsweise N,N,N,N-Benzyltrimethyl-ammoniumhydroxid, andere in organischen Medien lösliche Hydroxide, DBN, DBU, andere Amidine, Zinnoctoat, Dibutylzinndilaurat, andere organische Zinnverbindungen, Zinkoctoat, Essigsäure, andere Alkansäuren, Benzoesäure, Benzoylchlorid, andere Säurechloride oder Dibutylphosphat, bzw. andere Derivate der Phosphorsäure. Der Katalysator wird in Mengen von 0,005 Gew.-% bis 5 Gew.-%, bevorzugt 0,05 Gew.-% bis 1 Gew.-% zugegeben.

Die nach dieser Ausführungsform der Erfindung erhältlichen mit Alkoxysilangruppen modifizierten Polyurethane haben eine Viskosität von weniger als 500 000 mPas und vorzugsweise eine solche von weniger als 100 000 mPas (alle 23°C, Gp= 47,94/s).

Die erfindungsgemäßen Verbindungen eignen sich sehr gut als Bindemittel zur Herstellung von isocyanatfreien Polyurethanklebstoffe. Diese Klebstoffe vernetzen unter Einwirkung von Luftfeuchtigkeit über eine Silanolpolykondensation.

Eine Anwendung in Primern oder Beschichtungen ist ebenfalls denkbar.

Ein weiterer Gegenstand der Erfindung sind daher Klebstoffe, Primer und Beschichtungen basierend auf den erfindungsgemäßen Polyurethanprepolymeren.

Zur Herstellung solcher Klebstoffe können die erfindungsgemäßen Alkoxysilan-Endgruppen aufweisenden Polyurethanprepolymere zusammen mit üblichen Weichmachern, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren der Dichtstoffherstellung formuliert werden.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols oder Phosphorsäureester genannt.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung können alle metallorganischen Verbindungen und aminische Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bis-acetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise Alkyltitanate, wie Diisobutylbisaceteesigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non-5-en.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

### Beispiele

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden bei 23°C, mit einer Schergeschwindigkeit von 47,94/s mit einem Platte-Platte Rotationsviskosimeter, RotoVisko 1 der Firma Haake, DE nach ISO/DIS 3219:1990 durchgeführt.

Die zur Zeit der Versuchsdurchführung herrschende Umgebungstemperatur von 23°C wird als RT bezeichnet.

Polyesterdiol A: Polyester aus 1,6-Hexandiol (25,8%), Neopentylglykol (29,6%) und Adipinsäure (59,2%) abzüglich Wasser (14,6%), OH-Zahl: 94mgKOH/g.

### Beispiel 1 (erfndungsgemäß):

In einem 51-Sulfierbecher mit Deckel, Rührer, Thermometer und Stickstoffdurchfluss wurden zu 2197,92g des Polyesterdiols A 0,6g Dibutylzinndilaurat (Desmorapid Z^{®}, Bayer MaterialScience AG, Leverkusen, DE) gegeben, und die Mischung wurde auf 60°C erwärmt. Anschließend wurden über drei Stunden 814,3g Isocyanatopropyltrimethoxysilan (Geniosil^{®} GF40, Wacker AG, Burghausen) zugetropft und nachgerührt, bis titrimetrisch kein NCO-Gehalt mehr nachzuweisen war. Das erhaltene Alkoxysilyl-Endgruppen aufweisende Polyurethanprepolymer hatte eine Viskosität von 6.450mPas (23°C).

### Beispiel 2 (erfindungsgemäß):

In einem 51-Sulfierbecher mit Deckel, Rührer, Thermometer und Stickstoffdurchfluss wurden zu 2387,2g des Polyesterdiols A 0,2g Dibutylzinndilaurat (Desmorapid^{®} Z, Bayer MaterialScience AG, Leverkusen, DE) gegeben, und die Mischung wurde auf 60°C erwärmt. Anschließend wurden zunächst über eine halbe Stunde 117,6g Hexamethylendiisocyanat (Desmodur H^{®}, Bayer MaterialScience AG, Leverkusen, DE) zugegeben und dann über eine Stunde 557,1g Isocyanatopropyltrimethoxysilan (Geniosil^{®} GF40, Wacker AG, Burghausen) zugetropft und nachgerührt, bis titrimetrisch kein NCO-Gehalt mehr nachzuweisen war. Das erhaltene Alkoxysilyl-Endgruppen aufweisende Polyurethanprepolymer hatte eine Viskosität von 25.100mPas (23°C).

### Beispiel 3 (erfindungsgemäß):

566,2g des Polyesterdiols A wurden mit 205,3g Isophorondiisocyanat (Bayer MaterialScience AG, Leverkusen) bei 60°C unter Zugabe von 200 ppm Dibutylzinndilaurat (Desmorapid^{®} Z, Bayer MaterialScience AG, Leverkusen, DE) bis zum Erreichen des theoretischen NCO-Gehaltes von 4,62 % prepolymerisiert. Anschließend wurden bei 60°C zunächst 118g Mesamoll^{®} (Lanxess AG, Leverkusen, DE) und dann 299,2 g N-(3-Trimethoxysilylpropyl)asparaginsäure-diethylester (hergestellt gemäß EP-A 0 596 360, Bsp. 5) zugegeben, und es wurde gerührt, bis im IR-Spektrum keine Isocyanatbande mehr zu sehen war. Das erhaltene alkoxysilanendgruppenaufweisende Polyurethanprepolymer hatte eine Viskosität von 350.000 mPas (23°C).

### Beispiel 4 (erliodungsgemäß):

596,8g des Polyesterdiols A wurden mit 155,4g Hexamethylendiisocyanat (Desmodur H^{®}, Bayer MaterialScience AG, Leverkusen, DE) bei 60°C unter Zugabe von 50 ppm Dibutylzinndilaurat (Desmorapid^{®} Z, Bayer MaterialScience AG, Leverkusen, DE) bis zum Erreichen des theoretischen NCO-Gehaltes von 4,75 % prepolymerisiert. Anschließend wurden bei 60°C 299,2 g N-(3-Trimethoxysilylpropyl)asparaginsäure-diethylester (hergestellt gemäß EP-A 0 596 360, Bsp. 5) zugegeben, und es wurde gerührt, bis im IR-Spektrum keine Isocyanatbande mehr zu sehen war. Zu diesem Zeitpunkt betrug die Viskosität 100.000mPas (23°C). Es wurden dann 10,5g Essigsäure beigemengt und die Temperatur auf 100°C erhöht, wobei Ethanol entweicht. Nach sechs Stunden betrug die Viskosität noch 64.000mPas (23°C) und das Produkt wurde abgefüllt.

### Vergleichsbeispiel (nicht erfindunusgemäß):

918 g eines Polypropylenglykols der OH-Zahl 6,1 (Acclaim^{®} 18200N, Bayer MaterialScience AG, Leverkusen) wurden sechs Stunden lang im Vakuum (geringer Stickstoffdurchfluss) bei 120°C getrocknet. Dann wurden bei 60°C zunächst 24,57 g 3-Isocyanatopropyltrimethoxysilan (A-link^{®} 35, GE Advanced Materials, Wilton, Connecticut, USA) (Kennzahl 1,10) und dann 50 ppm Dibutylzinndilaurat (Desmorapid^{®} Z, Bayer MaterialScience AG, Leverkusen, DE) zügig zugegeben, und die Reaktion wurde weiter bei 60°C über fünf Stunden fortgeführt bis ein Rest-NCO-Wert von 0,03% erreicht war. Die Reaktion wurde auf 50°C abgekühlt und es wurden 0,32g Methanol beigemengt. Es wurde für etwa 90 Minuten bei 50°C weiter gerührt, bis kein NCO-Gehalt mehr nachweisbar war. Das erhaltene Alkoxysilyl-Endgruppen aufweisende Polyurethanprepolymer hatte eine Viskosität von 48.000mPas (23°C).

### Anwendungstechnische Beispiele

Zur Beurteilung der anwendungstechnischen Eigenschaften der verschiedenen Polymere wurden diese in folgender Formulierung verarbeitet:

| | Einsatzmenge in Gew.% |
|---|---|
| Polymer | 40,95 |
| Füllstoff (Socal^{®} U₁S₂) | 55,30 |
| Trocknungsmittel (Dynasylan^{®} VTMO) | 2,50 |
| Haftvermittler (Dynasylan^{®} 1146) | 1,20 |
| Katalysator (Tegokat^{®} 233) | 0,05 |

Zur Herstellung der Formulierung wird das Bindemittel mit Füllstoff (Socal^{®} U1S2 der Fa. Solvay GmbH) und Trocknungsmittel (Dynasylan^{®} VTMO der Fa. Degussa) versetzt und in einem Vakuumdissolver mit Wandabstreifer bei 3000U/min vermischt. Anschließend wird der Haftvermittler (Dynasylan^{®} 1146 der Fa. Degussa) hinzugefügt und innerhalb von 5 min bei 1000 U/min untergerührt. Zuletzt wird der Katalysator (Tegokat^{®} 233 der Fa. Goldschmidt) bei 1000 U/min eingerührt und abschließend die fertige Mischung im Vakuum entlüftet.

Zur Messung der physikalischen Eigenschaften werden sowohl Membranen von 2 mm Dicke, als auch Proben zur Bestimmung der Längsscherfestigkeit hergestellt. Aus den Membranen werden S2-Probenkörper gestanzt, zur Messung der Längsscherfestigkeit werden Probenkörper aus Eiche verwendet. Die Membranen werden zur Aushärtung 14 Tage bei 23°C/50% rel. Luftfeuchte gelagert, die Probenkörper für die Zugscherversuche 28 Tage bei ebenfalls 23°C/50% rel. Luftfeuchte.

Die Härte der Filme wird gemäß DIN 53505 gemessen, die mechanischen Eigenschaften der S2-Stäbe anhand von DIN 53504 und die Längsscherfestigkeit nach DIN 281.

Die folgende Tabelle zeigt die erhaltenen Ergebnisse:

| | Vgl. | Bsp. 1 | Bsp. 2 | Bsp. 4 |
|---|---|---|---|---|
| Shore A Härte | 72 | 88 | 85 | 90 |
| Zugfestigkeit [MPa] | 3,1 | 5,8 | 7,5 | 6,4 |
| Bruchdehnung [%] | 181 | 9 | 21 | 10 |
| Längsscherfestigkeit [MPa] | 2,8 | 3,9 | 4,3 | 4,4 |

Die Beispiele 1-5 zeigen den deutlichen Gewinn an Festigkeit, den man bei Verwendung Polyester-basierender silanhärtender Polyurethane erzielen kann. Die Zugfestigkeiten des reinen Klebstofffilms liegen 87 bis 242% über der des Vergleichsbeispiels, das auf einem Polyether basiert. Auch die Messungen an Klebverbunden (Eiche/Eiche) zeigen signifikante Steigerungen der Festigkeit, hier im Bereich von 39 bis 57%.

Somit lässt sich klar darstellen, dass die Verwendung Polyester-basierter silanhärtende Polyurethane einen großen Gewinn an kohäsiver Festigkeit ermöglicht. Dabei kann durch geeignete Syntheseverfahren die Viskosität der Polymere so niedrig gehalten werden, dass eine problemslose Handhabung möglich ist.

## Patentansprüche

1. Alkoxysilangruppenhaltige Polyurethane der allgemeinen Formel (I), 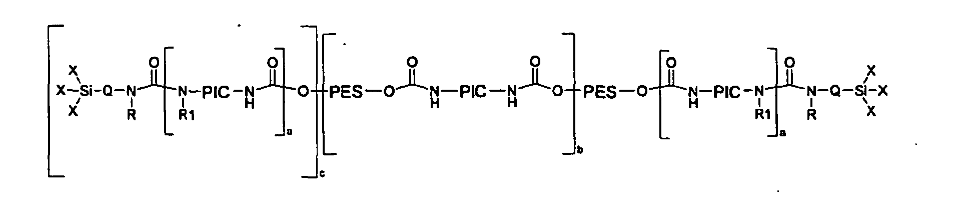 wobei
PIC ein um die Isocyanatgruppen reduzierter Rest eines Diisocyanates ist,
PES ein um die OH-Gruppen reduzierter Rest eines Polyesterpolyoles mit 2-3 OH- Gruppen ist, das zu mindestens 90 Gew.-% (bezogen auf Säure und Alkohole) aus Adipinsäure und einer Mischung aus jeweils mindestens 20 Gew.-% (bezogen auf die Mischung) Butandiol oder Hexandiol und Neopentylglykol hergestellt wurde und ein zahlenmittleres Molekulargewicht (Mn) zwischen 500g/mol und 2500g/mol aufweist,
a = 0 oder 1 ist,
b = 0 bis 5 ist,
c = 1 oder 2 ist,
X gleiche oder verschiedene Alkoxy- oder Alkylreste sind, die auch verbrückt sein können, wobei aber an jedem Si-Atom mindestens ein Alkoxyrest vorhanden sein muß,
Q ein difunktioneller linearer oder verzweigter aliphatischer Rest ist,
R entweder für Wasserstoff oder für einen beliebigen organischen Rest steht, der mit R1 (falls vorhanden) verbrückt sein kann, wobei R immer für Wasserstoff steht, wenn a = 0 ist, und
R1 entweder für Wasserstoff steht, oder für einen organischen Rest, der mit R verbrückt ist.

2. Alkoxysilangruppenhaltige Polyurethane gemäß Anspruch 1, **dadurch gekennzeichnet, dass** a = 0 ist.

3. Alkoxysilangruppenhaltige Polyurethane gemäß Anspruch 1, **dadurch gekennzeichnet, dass** a = 1 ist.

4. Alkoxysilangruppenhaltige Polyurethane gemäß Anspruch 3, **dadurch gekennzeichnet, dass** R und R1 als Hydantoinring verbrückt sind.

5. Alkoxysilangruppenhaltige Polyurethane gemäß einem der Ansprüche 1 bis 4, **dadurch gekennzeichnet, dass** b = 0 ist.

6. Verfahren zur Herstellung von mit Alkoxysilangruppen modifizierten Polyurethanen bei dem ein Polyesterpolyol mit 2-3 OH-Gruppen, das zu mindestens 90 Gew.-% (bezogen auf Säure und Alkohole) aus Adipinsäure und einer Mischung aus jeweils mindestens 20 Gew.-% (bezogen auf die Mischung) Butandiol oder Hexandiol und Neopentylglykol hergestellt wurde und ein zahlenmittleres Molekulargewicht (Mn) zwischen 500g/mol und 2500g/mol aufweist,
entweder
A) zunächst mit einem Überschuss Diisocyanat zu einem isocyanatfunktionellen Polyurethanprepolymer umgesetzt wird, welches anschließend mit einer Alkoxysilylgruppen tragenden Verbindung, die als weitere Funktionalität eine mit Isocyanatgruppen reaktive Funktionalität trägt, verkappt wird oder
B) optional zunächst mit einem Unterschuss Diisocyanat zu einem OH-funktionellen Polyurethanprepolymer umgesetzt wird und anschließend die OH-Gruppen dieses Prepolymeres und/oder Polyesters mit einem isocyanatfunktionellen Alkoxysilan verkappt werden.

7. Verfahren zur Herstellung von mit Alkoxysilangruppen modifizierten Polyurethanen gemäß Anspruch 6 A), **dadurch gekennzeichnet, dass** als Alkoxysilylgruppen tragende Verbindung, die als weitere Funktionalität eine mit Isocyanatgruppen reaktive Funktionalität trägt, eine Verbindung der allgemeinen Formel (II) verwendet wird, 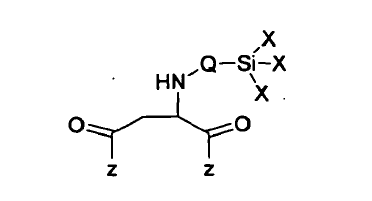 wobei X gleiche oder verschiedene Alkoxy- oder Alkylreste sind, die auch
verbrückt sein können, wobei aber an dem Si-Atom mindestens ein Alkoxyrest vorhanden sein muß,
Q ein difunktioneller linearer oder verzweigter aliphatischer Rest ist und
Z für einen aliphatischen C1-C12-Alkoxyrest steht.

8. Verfahren zur Herstellung von mit Alkoxysilangruppen modifizierten Polyurethanen gemäß Anspruch 7, **dadurch gekennzeichnet, dass** in einem anschließenden Schritt eine Cyclokondensation zu einem Hydantoin durchgeführt wird.

9. Verwendung der alkoxysilangruppenhaltigen Polyurethane gemäß einem der Ansprüche 1 bis 5 bei der Herstellung von Klebstoffen, Beschichtungen oder Primern.

10. Klebstoffe, Beschichtungen und Primer enthaltend alkoxysilangruppenhaltige Polyurethane gemäß einem der Ansprüche 1 bis 5.

## Claims

1. Alkoxysilane-containing polyurethanes of the general formula (I) 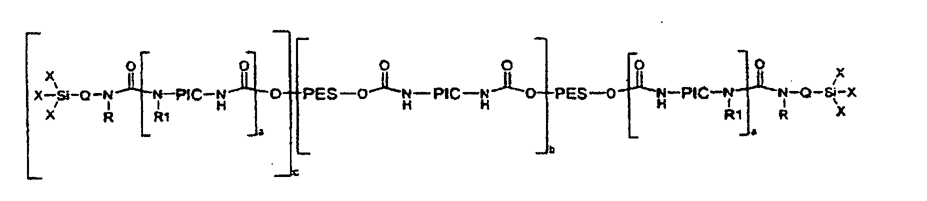 where
PIC is a residue of a diisocyanate reduced by removal of the isocyanate groups,
PES is a residue of a polyester polyol reduced by removal of the OH groups, having had 2-3 OH groups, which has been prepared to an extent of at least 90% by weight (based on acid and alcohols) from adipic acid and a mixture of at least 20% by weight each (based on the mixture) of butanediol or hexanediol and neopentyl glycol, and has a number-average molecular weight (Mn) between 500 g/mol and 2500 g/mol,
a = 0 or 1,
b = 0 to 5,
c = 1 or 2,
X are identical or different alkoxy or alkyl radicals which may also be bridged, though at least one alkoxy radical must be present on each silicon atom,
Q is a difunctional linear or branched aliphatic radical,
R is either hydrogen or any organic radical which may be bridged with R1 (if present), where R is always hydrogen when a = 0, and
R1 is either hydrogen or an organic radical which is bridged to R.

2. Alkoxysilane-containing polyurethanes according to Claim 1, **characterized in that** a = 0.

3. Alkoxysilane-containing polyurethanes according to Claim 1, **characterized in that** a = 1.

4. Alkoxysilane-containing polyurethanes according to Claim 3, **characterized in that** R and R1 are bridged as a hydantoin ring.

5. Alkoxysilane-containing polyurethanes according to any of Claims 1 to 4, **characterized in that** b = 0.

6. Process for preparing polyurethanes modified with alkoxysilane groups, in which a polyester polyol having 2-3 OH groups, which has been prepared to an extent of at least 90% by weight (based on acid and alcohols) from adipic acid and a mixture of at least 20% by weight each (based on the mixture) of butanediol or hexanediol and neopentyl glycol, and has a number-average molecular weight (Mn) between 500 g/mol and 2500 g/mol,
is either
A) first reacted with an excess of diisocyanate to give an isocyanate-functional polyurethane prepolymer which is then capped with a compound which bears alkoxysilyl groups and bears a functionality reactive with isocyanate groups as a further functionality,
or
B) optionally first reacted with a deficiency of diisocyanate to give an OH-functional polyurethane prepolymer, and then the OH groups of this prepolymer and/or polyester are capped with an isocyanate-functional alkoxysilane.

7. Process for preparing polyurethanes modified with alkoxysilane groups according to Claim 6 A), **characterized in that** the compound which bears alkoxysilyl groups and bears a functionality reactive with isocyanate groups as a further functionality is a compound of the general formula (II) 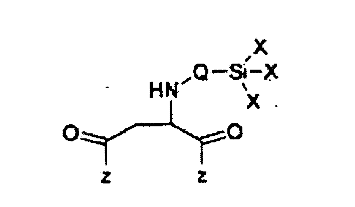 where X are identical or different alkoxy or alkyl
radicals which may also be bridged, though at least one alkoxy radical must be present on the silicon atom,
Q is a difunctional linear or branched aliphatic radical and
Z is an aliphatic C1-C12-alkoxy radical.

8. Process for preparing polyurethanes modified with alkoxysilane groups according to Claim 7, **characterized in that** a cyclocondensation to give a hydantoin is performed in a subsequent step.

9. Use of the alkoxysilane-containing polyurethanes according to any of Claims 1 to 5 in the production of adhesives, coatings or primers.

10. Adhesives, coatings and primers comprising alkoxysilane-containing polyurethanes according to any of Claims 1 to 5.

## Revendications

1. Polyuréthannes contenant des groupes alcoxysilane, de formule générale (I), 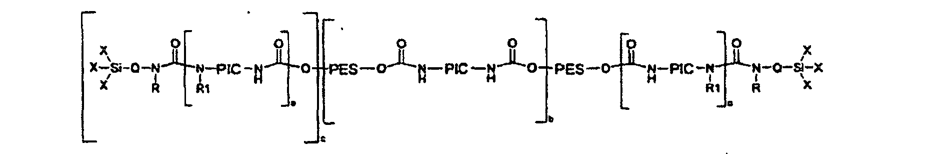 dans laquelle
PIC est un reste, diminué des groupes isocyanate, d'un diisocyanate,
PES est un reste, diminué des groupes OH, d'un polyesterpolyol comportant 2-3 groupes OH, qui a été préparé à raison d'au moins 90 % en poids (par rapport à l'acide et aux alcools) à partir d'acide adipique et d'un mélange de chacun au moins 20 % en poids (par rapport au mélange) de butanediol ou d'hexanediol et de néopentylglycol et présente une masse moléculaire moyenne en nombre (Mn) comprise entre 500 g/mole et 2 500 g/mole,
a est égal à 0 ou 1,
b est égal à 0 à 5,
c est égal à 1 ou 2,
X identiques ou différents, sont des radicaux alkyle ou alcoxy, qui peuvent également être pontés, au moins un radical alcoxy devant être présent sur chaque atome de silicium,
Q est un radical aliphatique bifonctionnel, linéaire ou ramifié,
R représente soit un atome d'hydrogène, soit un radical organique quelconque, qui peut être ponté avec R¹ (s'il est présent), R représentant toujours un atome d'hydrogène lorsque a est égal à 0, et
R1 représente soit un atome d'hydrogène, soit un radical organique qui est ponté avec R,

2. Polyuréthannes contenant des groupes alcoxysilane selon la revendication 1, **caractérisés en ce que** a est égal à 0.

3. Polyuréthannes contenant des groupes alcoxysilane selon la revendication 1, **caractérisés en ce que** a est égal à 1.

4. Polyuréthannes contenant des groupes alcoxysilane selon la revendication 3, **caractérisés en ce que** R et R¹ sont pontés sous forme de cycle hydantoïne.

5. Polyuréthannes contenant des groupes alcoxysilane selon l'une quelconque des revendications 1 à 4, **caractérisés en ce que** b est égal à 0.

6. Procédé pour la préparation de polyuréthannes modifiés avec des groupes alcoxysilane, dans lequel on fait réagir un polyester-polyol comportant 2-3 groupes OH, qui a été préparé à raison d'au moins 90 % en poids (par rapport à l'acide et à l'alcool) à partir d'acide adipique et d'un mélange de chacun au moins 20 % en poids (par rapport au mélange) de butanediol ou d'hexanediol et de néopentylglycol et présente une masse moléculaire moyenne en nombre (Mn) comprise entre 500 g/mole et 2 500 g/mole,
soit
A) d'abord avec un excès de diisocyanate pour obtenir un prépolymère polyuréthanne à fonction isocyanate, qui est ensuite coiffé avec un composé portant des groupes alcoxysilyle, qui porte comme autre fonctionnalité une fonctionnalité réactive avec des groupes isocyanate ou
B) en option d'abord avec un excès de diisocyanate pour obtenir un prépolymère polyuréthanne à fonction OH et ensuite les groupes OH de ce prépolymère et/ou polyester sont coiffés avec un alcoxysilane à fonction isocyanate.

7. Procédé pour la préparation de polyuréthannes modifiés avec des groupes alcoxysilane selon la revendication 6 A), **caractérisé en ce qu'**en tant que composé portant des groupes alcoxysilyle, qui porte comme autre fonctionnalité une fonctionnalité réactive avec des groupes isocyanate, on utilise un composé de formule générale (II), 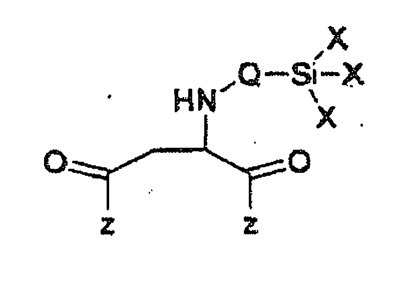 dans laquelle les X représentent des radicaux alkyle
ou alcoxy identiques ou différents, qui peuvent également être pontés, au moins un radical alcoxy devant toutefois être présent sur l'atome de silicium,
Q est un radical aliphatique bifonctionnel linéaire ou ramifié et
Z représente un radical alcoxy en C₁-C₁₂ aliphatique.

8. Procédé pour la préparation de polyuréthannes modifiés avec des groupes alcoxysilane selon la revendication 7, **caractérisé en ce que** dans une étape subséquente on effectue une cyclocondensation en une hydantoïne.

9. Utilisation des polyuréthannes contenant des groupes alcoxysilane selon l'une quelconque des revendications 1 à 5, dans la production d'adhésifs, de revêtements ou de primaires.

10. Adhésifs, revêtements et primaires, contenant des polyuréthannes contenant des groupes alcoxysilane selon l'une quelconque des revendications 1 à 5.
